# EUROPEAN PATENT SPECIFICATION

(11) **EP 2 135 338 B1**
(45) Date of publication and mention of the grant of the patent: **03.08.2016**
(21) Application number: 08714502.5
(22) Date of filing: 03.03.2008
(51) Int. Cl.: H02H 1/00, H02H 7/26

(54) **SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR**
SYSTEM ZUM BESCHAFFEN VON DATEN UND VERVIELFACHEN VON SIGNALISIERUNGS- UND SCHUTZKONTAKTEN IN GERÄTEN VON UMSPANNWERKEN UND KRAFTWERKEN UND ÄHNLICHES
SYSTÈME D'ACQUISITION DE DONNÉES ET MULTIPLICATION DE CONTACTS DE SIGNALISATION ET DE PROTECTION DANS DES ÉQUIPEMENTS DE SOUS-STATIONS, DE CENTRALES ÉLECTRIQUES ET SITES SIMILAIRES

(30) Priority: 20.03.2007 BR PI0700838
(43) Date of publication of application: 23.12.2009
(73) Proprietor: Santos, Eduardo Pedrosa, CEP-12940-800 Atibaia - SP (BR)
(72) Inventor: Santos, Eduardo Pedrosa, CEP-12940-800 Atibaia - SP (BR)
(74) Representative: Gislon, Gabriele
(86) International application number: PCT/BR2008/000055
(87) International publication number: WO 2008/113141

(56) References cited:
- DE-A1- 10 010 290
- JP-A- H11 136 845
- KR-A- 20050 013 331
- US-A- 4 972 290

## Description

### BRIEF INTRODUCTION

The Invention Patent application deals about a novel "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR", a system that uses auxiliary relays for the multiplication of protection and supervision device contacts as a means of information entry for digital data acquisition, which also makes it feasible that the digital acquisition of the contact statuses of the protection and supervision devices is made directly in the devices themselves, by means of the incorporation of simple circuits into them, thus reducing the number of necessary discreet inlets in the data acquisition system, reducing and simplifying the cabling connection in addition to reducing the number of necessary outlet contacts in the auxiliary relays. As a result, it is managed to reduce costs and time for the project, installation, tests and maintenance of such systems.

### BRIEF HISTORY

In electricity generation plants and transmission and distribution substations, a large quantity of high voltage equipment is used, including generators, power transformers, circuit breakers, high voltage switches and countless other equipment.

All equipment to be used at the above mentioned places are equipped with various auxiliary systems for the supervision of their operation condition, protection against internal and external defects and also with systems for the online monitoring of its status for maintenance purposes.

The various auxiliary systems for the supervision, protection and monitoring have the use of a large number of sensors and devices in common that disposes of outlet contacts that are activated for signaling, indicate alarms or cause the equipment emergency switch off. Thus, such systems have an enormous quantity of outlet contacts.

### STATE OF THE TECHNIQUE

In equipment used in the substations, there is a frequent need that the activation information of one same contact is of utmost importance in different systems of the installation, which forces the use of sensors and devices with various repeated outlet contacts for the same function or the use of auxiliary relays for the multiplication of contacts. The outlet contact of the sensor or device is connected to the spool of the auxiliary relay, and such spool activates various outlet contacts of the relay, whereby each one of such contacts transmits the information to a different system.

When the contact that is being multiplied, is a contact for the equipment emergency switch off, such auxiliary relay must perform quickly in such a way that no substantial delay between the energizing of its spool and the performance of the outlet contacts. Thus, a delay in the transmission of the switch off signal that could aggravate the damages caused by a defect is avoided.

Following the trend described above, some of the systems that receive the information from the mentioned contacts are the supervision systems of the substation / power plant and the high voltage equipment monitoring system. In general, such systems obtain that information by means of a connection of one of the outlet contacts of the auxiliary relays to a digital data acquisition equipment that disposes of an independent entry for each contact that is intended to be monitored. Therewith, it is observed that, to the extent to which the quantity of contacts to be monitored is increased, also increases the number of necessary inlets in the data acquisition equipment, as well as the cabling that is necessary to connect the outlet contacts of the auxiliary relays to the acquisition equipment is increased. This is aggravated through the fact that the acquisition equipment is generally located in the control room of the substation, dozens or hundreds of meters away from the auxiliary relays, generally located in the patio of the substation.

On the other hand, to the extent that the quantity of systems that must receive the information from the contacts is increased, also the quantity of the outlet contacts that are necessary in the auxiliary relays is increased.

The data acquisition equipment has one or more outlets that generally consist of serial communication ports for the transfer of the acquired data to the equipment supervision or monitoring systems.

The conventional high voltage equipment protection, supervision and monitoring system has, consequently, the following disadvantages:
To the extent to which the quantity of contacts to be monitored is increased, the number of necessary entries in the data acquisition equipment is directly proportionally increased, which increases the number of vulnerable points and makes them more expensive and occupy more space in the control panels;

To the extent to which the quantity of contacts to be monitored increases, also increases the quantity of cabling necessary to connect the outlet contacts of the auxiliary relays to the acquisition equipment. This, together with the fact that the acquisition equipment are generally located far away from the auxiliary relays, makes the implantation of such systems more expensive while multiplying the quantity of necessary cabling, increasing the space required in the installation cable conduits and increasing the number of potential points of failure;

To the extent to which the quantity of systems that need to receive the information from contacts increases, also the quantity of outlet contacts that are necessary in the auxiliary relays is increased, which makes them more expensive, increases their dimensions, which makes them occupy more space in the control panels, and increases the number of potential points of failure.

### THE NEW INVENTION

The new invention is a system that integrates both the functions of the quick auxiliary relays for the contact multiplication in protection and supervision devices as means of information entry for the digital data acquisition, which makes also feasible that the digital acquisition of the contact statuses of the protection and supervision devices is carried out directly in the devices themselves by means of the incorporation of simple circuits in them, irrespective of the used physical media, in such a way that the contact status information that was previously transmitted discreetly with one wire to each contact is now transmitted digitally in such a way that the physical media does not need to be extended as the quantity of contacts to be monitored is increased.

### ADVANTAGES OF THE INVENTION

Use of only one inlet in the data acquisition equipment to monitor the status of a large number of contacts. Thus, the equipment becomes less expensive as the quantity of contacts to be monitored is reduced, and also the space in the control panels is reduced, as well as, consequently, the number of vulnerable points; To the extent to which the quantity of contacts to be monitored is increased, it is sufficient to connect the acquisition outlets of the auxiliary relays or additional protection and supervision devices in parallel, which causes little increase in the quantity of necessary cabling, in view of the fact that the auxiliary relays or protection and supervision devices are close to each other;

The remote transmission of the acquired information is made by means of a communication channel that does not require expansions as the quantity of contacts to be monitored is increased. Low cost physical means of communication may be used, such as for example twisted pairs, in addition to various other options such as optical fibers, wireless communication and others;

The number of necessary outlet contacts in the auxiliary relays that multiply contacts is reduced as it is not necessary to use one outlet contact of each relay for the digital data acquisition equipment. Therewith, the cost and the dimensions of such relays are reduced, thus avoiding additional space in the control panels.

### DETAILED DESCRIPTION

In the following, the invention will be explained technically, whereby the drawings listed below will be used as basis;
Figure 1: Diagram of the SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR, showing the basic components such as sensor or device, auxiliary relay, and outlet contacts connected to any system;
Figure 2: Diagram of the SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR, showing the technology by which the information transmission is carried out in the form of an analog signal;
Figure 3: Diagram of the SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR, showing the technology by which the information transmission is carried out through an electronic circuit;
Figure 4: Diagram of the SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR, showing the application of the invention directly in the sensors and protection and supervision devices of the equipment;
Figure 5: Diagram of the SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR, according to the application of figure 4, showing the technology by which the information transmission is carried out in the form of an analog signal;
Figure 6: Diagram of the SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR, according to the application of figure 4, showing the technology by which the information transmission is carried out through an electronic circuit;

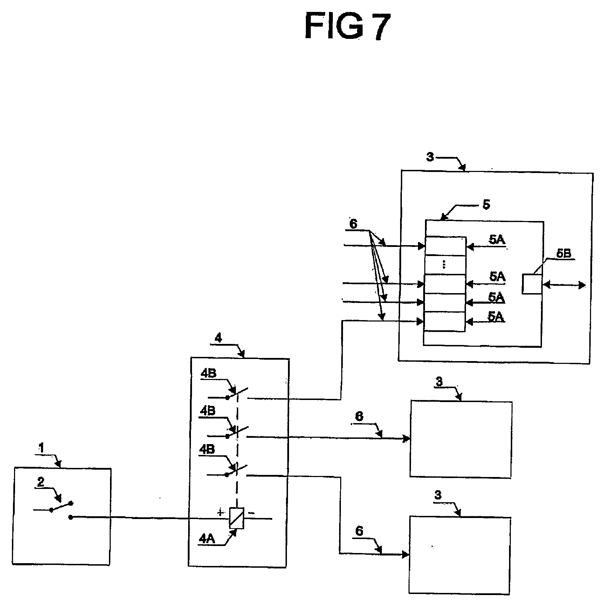

Figure 7: Diagram of a conventional system.

The "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR", the subject-matter of this Invention Patent application, consists of the use of auxiliary relays (4) for the multiplication of contacts (2) of protection and supervision devices (1) as means of information entry for digital data acquisition, which makes feasible that the digital acquisition of the contact statuses (2) of the protection and supervision devices is made directly in the devices themselves by means of incorporating simple circuits.

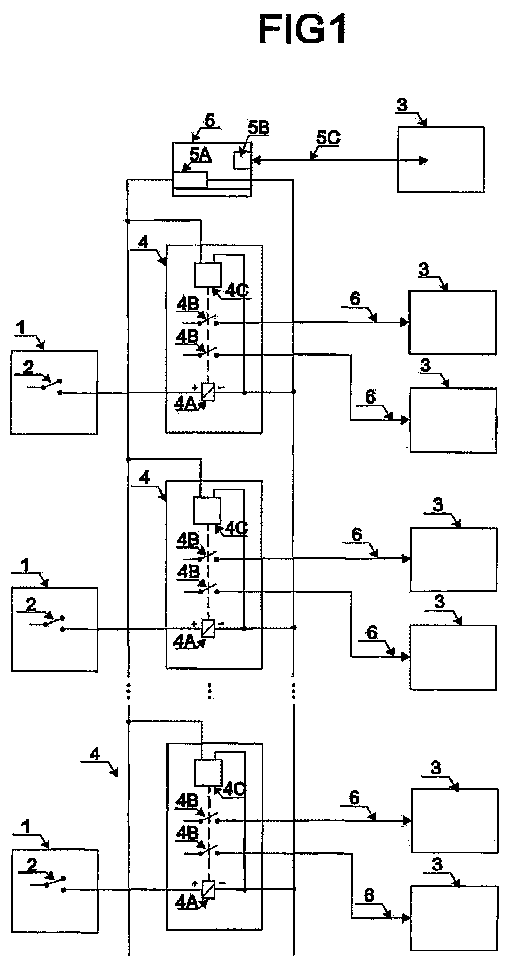

As figure 1 illustrates, the outlet contact (2) of the sensor or device (1) is connected to the spool (4A) of the auxiliary relay (4), and such spool activates various outlet contacts (4B) of the relay (4), and those contacts (4B) are then available for information transmission to different systems (3). The auxiliary relays (4) perform quickly in such a way that no substantial delay occurs between energizing the two spools (4A) and the performance of the outlet contacts (4B), which allows for the application with contacts for emergency switch offs of the equipment.

As the information on the status of the contacts (2) is available in the auxiliary relays (4), the claimed system integrates the auxiliary relays (4) in the data acquisition equipment (5) by means of a two wire outlet (4C) in the relays (4), specific for that function. The two terminals of the mentioned outlet (4C) are connected in parallel to all auxiliary relays (4), whereby they are connected to the inlet (5A) of the data acquisition module (5), located close to the auxiliary relays (4), thus making up a data acquisition network that uses only two wires.

In order to reduce the quantity of wires used, the negative pole of the relay (4) spools (4A) may be used as one of the outlet terminals (4C) for the data acquisition as the negative poles of the spools (4A) are interconnected in the majority of the applications. Alternatively, as one of the outlet terminals (4C) for the data acquisition one of the terminals in an outlet contact (4B) may be used that in the majority of the applications are interconnected in the various relays for the connection with the positive pole of the feed.

Provided that the contact status information (2) has reached the acquisition equipment (5), the information may be transmitted to the supervision, monitoring or other remotely located systems by using a serial communication port (5B). As physical media (5C) for the information transmission any existing standard may be used, such as for example twisted pairs, optical fiber pairs, wireless communication and others. It should be stressed, irrespective of the physical media used, that the contact status information (2) that was previously transmitted discreetly with a wire to each contact, is now transmitted digitally in such a way that the physical media does not need to be extended as the quantity of contacts to be monitored is increased.

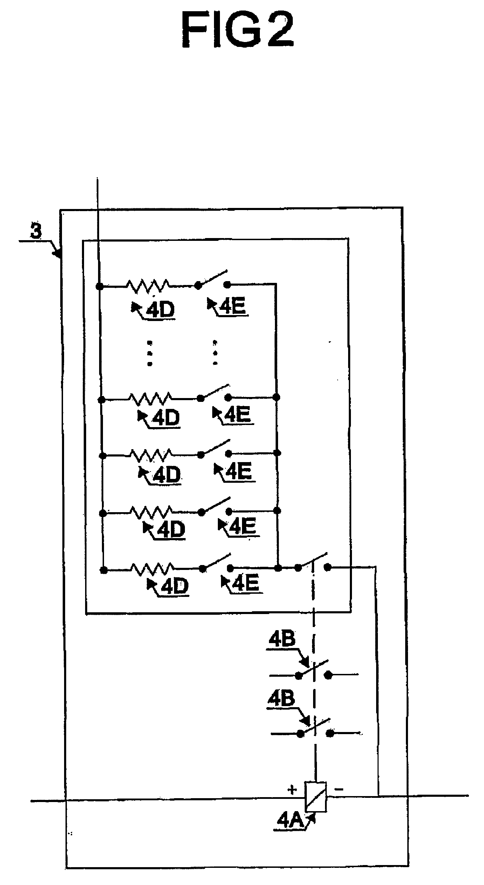

Various technologies may be used for the transmission of contact status information between the auxiliary relays (4) and the acquisition equipment (5). The first of them, shown in figure 2, adds an extremely low cost to the auxiliary relays (4) and consists of the information transmission in the form of an analog signal. Therefore, each auxiliary relay (4) is internally equipped with various resistors (4D). In the event the contact connected to the relay inlet (4A) is open the resistors (4D) will be disconnected from the outlet (4C) that will be open. If, on the other hand, the contact (2) is closed the resistors (4D) will be connected to the outlet (4C). The resistors (4D) may be inserted into or taken out of the circuit by means of selection contacts (4E), thus allowing that the equivalent electrical resistance obtained in the outlet (4C) reaches the value desired by the user. Such resistors (4D) are sized in such a way that their electrical resistances observe a proportional ratio amongst each other of 2° for the first one, 2¹ for the second one, 2² for the third one, 2³ for the fourth one and so on. For illustration purposes, if the first resistor has a resistance of 10 ohms, the second one must have 20 ohms, the third one 40 ohms, the fourth one 80 ohms and so on.

In each auxiliary relay (4), a different resistance value will be programmed without repetitions. As the outlet (4C) of all relays (4) is connected in parallel, the equivalent resistance obtained in that connection is determined by the closed contacts (2), in such a way that through the continuous measurement of such resistance the acquisition equipment (5) is capable of faultlessly informing which contacts (2) are open and which ones are closed. This is possible because the use of the binary proportionality between the resistors (4D) of the relays (4) makes it impossible that the resistance combination of two or more relays corresponds to the resistance of a third one.

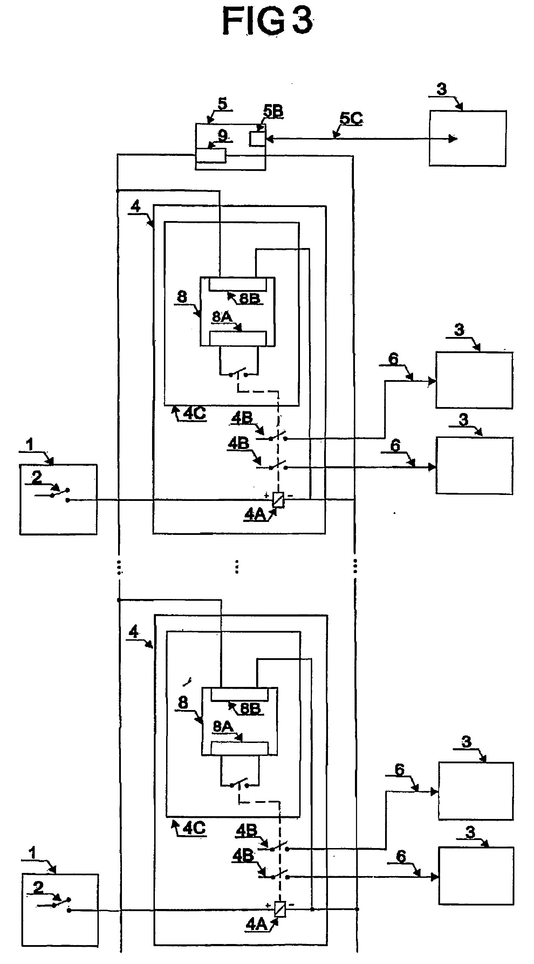

A second technology usable for the transmission of contact status information between the auxiliary relays (4) and the acquisition equipment (5) is as shown in figure 3 that, more specifically saying, deals with the inclusion, in the relay (4), of an electronic circuit (8) equipped with an inlet (8A) that carries out the measurement of the contact (2) and of a serial communication port (8B) connected to the relay outlet (4C). The communication ports (8B) are linked in a network by connecting in parallel to the outlets (4C) of all relays (4), and eventually interconnecting themselves to a serial communication port (9) in the acquisition equipment (5). Each communication port (8B) is programmed with a different address in such a way that the acquisition equipment (5) may communicate with each of the relays (4), obtaining from them the information of the current open or closed status of each contact (2). Using a known serial communication standard with a feeding resource through the same communication network, the communication port (9) of the acquisition equipment (5) may provide the auxiliary feeding to the electronic circuits (8) of the relays (4).

Countless other technologies may be used likewise for the transmission of the contact (2) status information between the auxiliary relays (4) and the acquisition equipment (5), such as the wireless transmission through radio waves, a transmission using auxiliary feeding cables of the installation (PLC - Power Line Communication), among others.

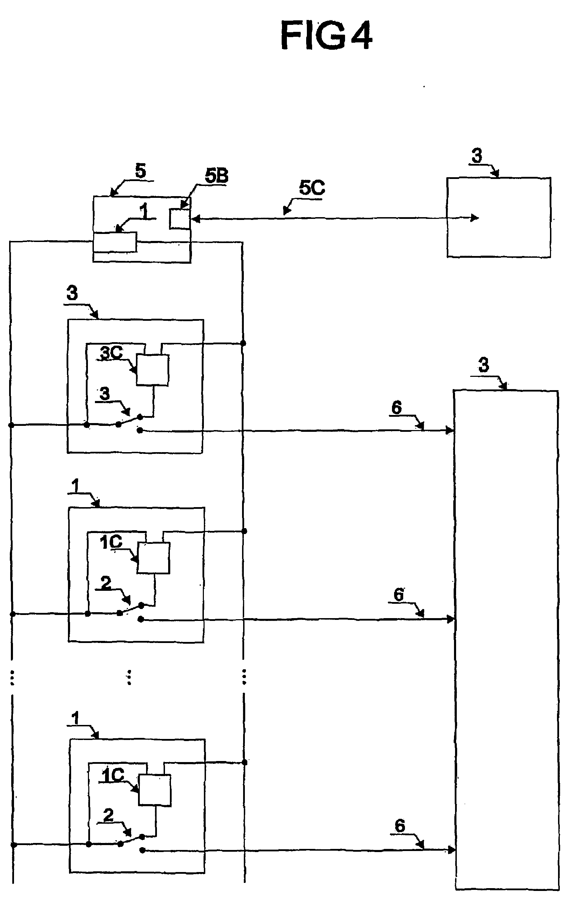

In addition to the above-mentioned application in which the auxiliary relays (4) that multiply contacts are used as entry means contact status information for the digital data acquisition, the same system may be applied directly to the sensors and equipment protection and supervision devices. As shown in figure 4, in which various protection or supervision devices (1) can be observed, each one with a revertible outlet contact (2) connected to a remote supervision or monitoring system (3). In a large part of the applications, although the contacts (2) are revertible, only the connection on the normally open side (NO) or on the normally closed side (NC) is used so that one of them is not used. Thus, the information outlet (1C) to the data acquisition equipment (5) may be inserted in the protection device (1) itself, using the free NO or NC side of the contacts (2).

In the last mentioned application, several technologies may be used for the transmission of contact status information (2) between the protection and supervision devices and the acquisition equipment (5), in a way similar to the application using the auxiliary relays.

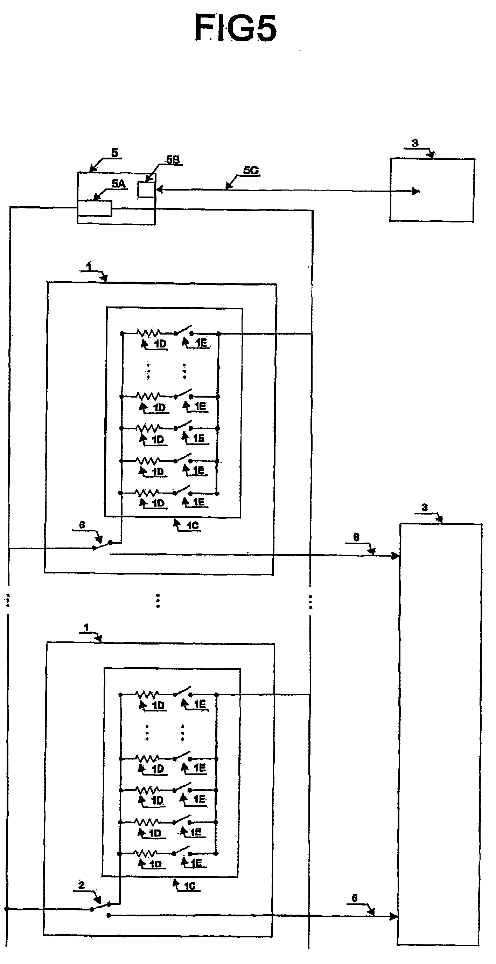

The first one of them, shown in figure 5, adds an extremely low cost to the protection and supervision devices and consists of the information transmission in the form of an encrypted analog signal. Therefore, each device (1) is internally equipped with various resistors (1D). In the event the contact (2) is activated, closing the common point with the NO side of the contact, the resistors (1D) will be disconnected from the outlet (1C) that will be open. If, on the other hand, the contact (2) is idle, closing the common point with the NC side of the contact, the resistors (1D) will be connected to the outlet (1C). The resistors (1D) may be inserted into or taken out of the circuit by means of selection contacts (1E), enabling the equivalent electrical resistance obtained in the outlet (1C) to reach the value desired by the user. Such resistors are sized in such a way that their electrical resistances observe a proportional ratio amongst each other of 2° for the first resistor, 2¹ for the second one, 2² for the third one, 2³ for the fourth one and so on.

In each device (1) a different resistance value is programmed without repetition. As the outlet (1C) of all devices (1) is connected in parallel, the equivalent resistance obtained in that connection is determined by the closed contacts (2) in such a way that, by the continuous measurement of such resistance in its inlet (5A), the acquisition equipment (5) is capable of faultlessly informing which contacts (2) are open and which ones are closed.

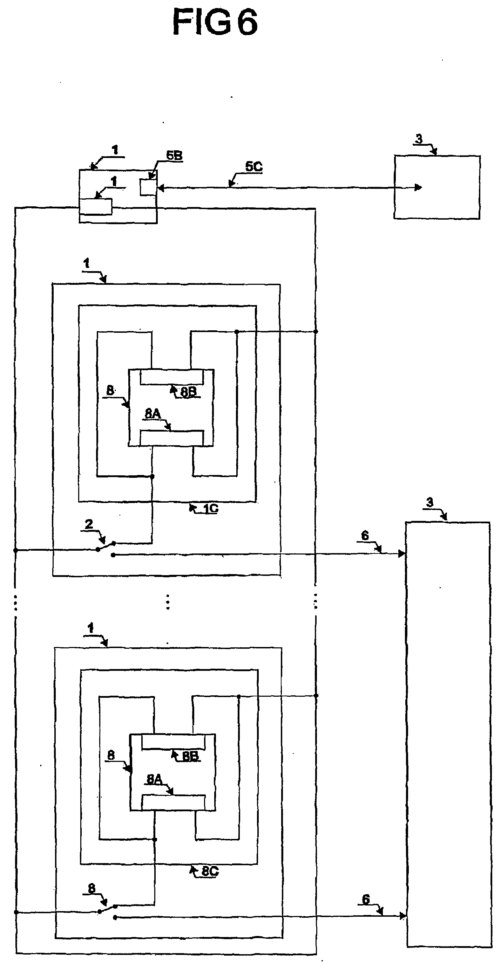

Another technology, shown in figure 6, may be used for the transmission of contact status information between the devices (1) and the acquisition equipment (5), by means of including in the device (1) an electronic circuit (8) equipped with an inlet (8A) that performs the measurement of the contact status (2) and with a serial communication port (8B) that is connected to the outlet (1C) of the device (1). The communication ports (8B) are connected in a network when switching the outlets (1C) of all devices (1) in parallel and are connected to a serial communication port (9) in the acquisition equipment (5). Each communication port (8B) is programmed with a different address, in such a way that the acquisition equipment (5) can communicate with each of the devices (1) and obtain information of the current open or closed status of each contact (2) from them. Using any communication standard with a feeding resource through the same communication network, the very communication port (9) of the acquisition equipment (5) may provide auxiliary feeding to the electronic circuits (8) of the devices (1).

Countless other technologies may be equally used for the transmission of the contact status information between the auxiliary relays and the acquisition equipment (5), such as wireless transmission, transmission using the auxiliary feeding cables of the installation (PLC - Power Line Communication) and others.

## Claims

1. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR", comprising:
- auxiliary relays (4) for the multiplication of contacts, wherein each auxiliary relay (4) has a spool (4A) connected to a respective equipment contact (2) and several outlet contacts (4B), where said spool (4A) activates said several outlet contacts based on the status of the equipment contact (2), thus the information on the contact (2) statuses is already available in the auxiliary relays (4); and
- an acquisition system of contact status data,
wherein the system is **characterised in that** said acquisition system of contact status data is a data acquisition equipment (5) integrating the auxiliary relays (4) by means of a respective two wire outlet (4C) specifically implemented for that function in the auxiliary relays (4), wherein the two terminals of each of said two wires outlets (4C) are respectively connected in parallel in all auxiliary relays (4) and connected to two respective inlets (5A) of the data acquisition equipment (5), making up a data acquisition network that uses only two wires.

2. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 1, **characterized by** the fact that outlet contact (2) of a sensor or device (1) is connected to the spool (4A) of the auxiliary relay (4), and such spool activates said various outlet contacts (4B) of the auxiliary relay (4), so that such contacts (4B) are available for transmitting the information to different systems (3).

3. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 2, **characterized by** the fact that the auxiliary relay (4) is performing quickly, in such a way that a substantial delay between the energizing of its spool (4A) and the performance of the outlet contacts (4B) is not caused, thus allowing for the application with contacts for the emergency switch off of equipment.

4. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 1, **characterized by** the fact that the negative pole of the relay (4) spools (4A) may be used as one of the terminals of the outlet (4C) for the data acquisition as the negative poles of the spools (4A) are already interconnected in the majority of the applications.

5. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 1 or 4, **characterized by** the fact that one of the terminals of the outlet contact (4B) may be optionally used as one of the outlet (4C) terminals for the data acquisition.

6. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 1, **characterized by** the fact that as soon as the contact status information (2) have reached the acquisition equipment (5) they are transmitted to the supervision, monitoring or other systems remotely located by using a serial communication port (5B), employing any existing standard as physical media (5C) for the information transmission, such as twisted pairs, optical fiber pairs, wireless communication and others.

7. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claims 1, 4 or 5, **characterized by** allowing for the use of several technologies for the transmission of contact status information between the auxiliary relays (4) and the acquisition equipment (5), and by allowing for the transmission of the contact status information between the auxiliary relays (4) and the acquisition equipment (5) in the form of an encrypted analogue signal.

8. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 7 **characterized by** the fact that each auxiliary relay (4) is internally equipped with various resistors (4D) that will be disconnected from the outlet (4C) in the event the contact (2) connected to the relay inlet (4A) is open; reciprocally, in the closed contact (2), the resistors (4D) will be connected to the outlet (4C), and by the fact that said resistors (4D) may be individually inserted into or taken out of the circuit by means of selection contacts (4E), thus allowing that the equivalent electrical resistance obtained in the outlet (4C) reaches the value desired by the user.

9. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 1 **characterized by** allowing for the direct integration of sensors and protection and supervision devices (1) of the equipment in the digital data acquisition, thus dispensing with the use of the auxiliary relays that multiply contacts as means of entry of contact status information.

10. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 9, **characterized by** the fact that the information outlet (1C) to the data acquisition equipment (5) is inserted in the protection device (1) itself, using the free NO or NC side of the contacts (2).

11. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 9 or 10, **characterized by** allowing for the use of different technologies for the transmission of the contact (2) status information between the protection and supervision devices (1) and the acquisition equipment (5), and by allowing for the transmission of the contact status information (2) between the protection and supervision devices (1) and the acquisition equipment (5) in the form of an encrypted analog signal.

12. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 11, **characterized by** the fact that each protection and supervision (1) device is internally equipped with various resistors (1D), disconnected from the outlet (1C) in the case of an activated contact (2), closing the common point with the NO side of the contact; otherwise, with the idle contact (2), when closing the common point with the NC side of the contact, the resistors (1D) will be connected to the outlet (1C), and by the fact that the resistors (1D) may be individually or otherwise inserted in the circuit by means of selection contacts (1E), which allows that the equivalent electrical resistance obtained in the outlet (1C) reaches the value desired by the user.

13. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 8 or 12, **characterized by** the fact that the resistors (1D, 4D) are sized in such a way that their electrical resistances observe a binary proportion ratio amongst each other of 20 for the first resistor, 21 for the second one, 22 for the third one, 23 for the fourth one and so on.

14. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 7, 8, 11, 12 or 13, **characterized by** the fact that in each auxiliary relay (4) or in each protection and supervision device (1) a different resistance value is programmed without repetitions and that the outlets (4C, 1C) of all relays (4) or of all devices (1) are connected in parallel, in such a way that the equivalent resistance obtained in such connected will be determined by the closed contacts (2).

15. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 7, 8, 11, 12, 13 or 14, **characterized by** the use of binary proportionality between the device (1) or relay (4) resistors (1D, 4D), in such a way as to make it impossible that the resistance combination of two or more devices (1) or of two or more relays (4) corresponds to the resistance of a third one, which makes it possible that the acquisition equipment (5) is capable of exactly informing which contacts (2) are open and which ones are closed by means of continuous measuring of such resistance.

16. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 3, 4, 5, 7, 9, 10 or 11, **characterized by** allowing the transmission of the contact status information between the protection and supervision devices (1) and the acquisition equipment (5) or between the auxiliary relays (4) and the acquisition equipment (5), by means of the inclusion, in the devices (1) or in the relays (4), of an electronic circuit (8) equipped with an inlet (8A) that carries out the measurement of the contact (2) state, whereby such circuit (8) is equipped with a serial communication port (8B) connected to the outlet (1C, 4C) of the device or of the relay (4).

17. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 16, **characterized by** the fact that the communication ports (8B) are connected in a network by connecting in parallel to the outlets (1C, 4C) of all devices (1) or of all relays (4), eventually connecting to a serial communication port (9) in the acquisition equipment (5), whereby in each communication port (8B) a different address is programmed, in such a way that the acquisition equipment (5) may communicate with each of the devices (1) or of the relays (4) and obtain from then the information about the current open or closed status in each contact (2).

18. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 17, **characterized by** the fact that the communication port (9) of the acquisition equipment (5) provides the auxiliary feeding for the electronic circuits (8) of the devices (1) or of the relays (4) by means of any serial communication network equipped with a feeding resource through the same communication network.

19. "SYSTEM FOR ACQUISITION OF DATA AND MULTIPLICATION OF SIGNALLING AND PROTECTION CONTACTS IN EQUIPMENTS OF SUBSTATIONS AND ELECTRIC POWER PLANTS AND SIMILAR" in accordance with claim 3, 4, 5, 7, 9, 10 or 11, **characterized by** allowing for the transmission of the contact status information between the protection and supervision device (1) and the acquisition equipment (5) or between the auxiliary relays (4) and the acquisition equipment (5) using several technologies, such as wireless transmission through radio waves, transmission using the auxiliary feeding cables of the installation, among others.

## Patentansprüche

1. System zum Beschaffen von Daten und Vervielfachen von Signalisierungs- und Schutzkontakten in Geräten von Umspannwerken und Kraftwerken und Ähnliches umfassend:
- Hilfsrelais (4) zum Vervielfachen von Kontakten, wobei jedes Hilfsrelais (4) eine Spule (4A) aufweist, welche an einen jeweiligen Gerätekontakt (2) und mehrere Ausgangskontakte (4B) angeschlossen ist, wobei die genannte Spule (4A) die genannten mehreren Ausgangskontakte aktiviert, basierend auf dem Status des Gerätekontakts (2), sodass die Information über die Status der Kontakte (2) bereits in den Hilfsrelais (4) verfügbar ist; und
- ein Beschaffungssystem für Kontaktstatusdaten,
wobei das System **dadurch gekennzeichnet ist, dass** das genannte Beschaffungssystem für Kontaktstatusdaten ein Datenbeschaffungsgerät (5) ist, welches die Hilfsrelais (4) integriert, mittels eines jeweiligen Zweidrahtausgang (4C), welcher spezifisch für diese Funktion in den Hilfsrelais (4) verwirklicht ist, wobei die zwei Anschlussklemmen von jedem der genannten zwei Drahtausgänge (4C) jeweils parallel in allen Hilfsrelais (4) angeschlossen sind und an zwei jeweilige Eingänge (5A) des Datenbeschaffungsgeräts (5) angeschlossen sind, unter Bildung eines Datenbeschaffungsnetzwerkes, welches nur zwei Drähte verwendet.

2. System zum Beschaffen von Daten und Vervielfachen von Signalisierungs- und Schutzkontakten in Geräten von Umspannwerken und Kraftwerken und Ähnliches nach Anspruch 1, **dadurch gekennzeichnet, dass** der Ausgangskontakt (2) eines Sensors oder einer Vorrichtung (1) an die Spule (4A) des Hilfsrelais (4) angeschlossen ist, und diese Spule die genannten mehreren Ausgangskontakten (4B) des Hilfsrelais (4) aktiviert, sodass diese Kontakte (4B) zur Übertragung der Information an unterschiedliche Systeme (3) verfügbar sind.

3. System zum Beschaffen von Daten und Vervielfachen von Signalisierungs- und Schutzkontakten in Geräten von Umspannwerken und Kraftwerken und Ähnliches nach Anspruch 2, **dadurch gekennzeichnet, dass** das Hilfsrelais (4) schneller Leistung ist, derart dass keine wesentliche Verzögerung zwischen der Erregung dessen Spule (4A) und dem Betrieb der Ausgangskontakte (4B) verursacht wird, sodass die Anwendung mit Kontakten zur Notausschaltung von Geräten ermöglicht wird.

4. System zum Beschaffen von Daten und Vervielfachen von Signalisierungs- und Schutzkontakten in Geräten von Umspannwerken und Kraftwerken und Ähnliches nach Anspruch 1, **dadurch gekennzeichnet, dass** der Minuspol der Spulen (4A) des Relais (4) als eine der Anschlussklemmen des Ausgangs (4C) zur Datenbeschaffung verwendet werden kann, weil die Minuspole der Spulen (4A) in den meisten Anwendungen bereits zusammengeschaltet sind.

5. System zum Beschaffen von Daten und Vervielfachen von Signalisierungs- und Schutzkontakten in Geräten von Umspannwerken und Kraftwerken und Ähnliches nach Anspruch 1 oder 4, **dadurch gekennzeichnet, dass** eine der Anschlussklemmen des Ausgangskontakts (4B) optional als eine der Anschlussklemmen des Ausgangs (4C) zur Datenbeschaffung verwendet werden kann.

6. System zum Beschaffen von Daten und Vervielfachen von Signalisierungs- und Schutzkontakten in Geräten von Umspannwerken und Kraftwerken und Ähnliches nach Anspruch 1, **dadurch gekennzeichnet, dass** sobald die Kontaktstatus-Information (2) das Beschaffungsgerät (5) erreicht hat, sie an die Überwachungs-, Beobachtungs- oder andere entfernt lokalisierten Systeme unter Verwendung eines seriellen Kommunikationsport (5B) übertragen werden, wobei jeder bestehende Standard als physikalische Medien (5C) zur Informationsübertragung, wie verdrillte Paare, optische Faserpaare, drahtlose Kommunikation und Andere, benutzt wird.

7. System zum Beschaffen von Daten und Vervielfachen von Signalisierungs- und Schutzkontakten in Geräten von Umspannwerken und Kraftwerken und Ähnliches nach den Ansprüchen 1, 4 oder 5, **dadurch gekennzeichnet, dass** die Verwendung von mehreren Technologien zur Übertragung der Kontaktstatus-Information zwischen den Hilfsrelais (4) und dem Beschaffungsgerät (5) ermöglicht wird, und dass die Übertragung der Kontaktstatus-Information zwischen den Hilfsrelais (4) und dem Beschaffungsgerät (5) in Form eines verschlüsselten Analogsignals ermöglicht wird.

8. System zum Beschaffen von Daten und Vervielfachen von Signalisierungs- und Schutzkontakten in Geräten von Umspannwerken und Kraftwerken und Ähnliches nach Anspruch 7, **dadurch gekennzeichnet, dass** jedes Hilfsrelais (4) intern mit verschiedenen Widerstandskörpern (4D) ausgerüstet ist, welche vom Ausgang (4C) getrennt werden, im Falle dass der mit dem Relaiseingang (4A) angeschlossenen Kontakt (2) offen ist; umgekehrt, im Falle eines geschlossenen Kontakts (2), werden die Widerstandskörper (4D) mit dem Ausgang (4C) angeschlossen, und dadurch, dass die genannten Widerstandskörper (4D) einzeln in die Schaltung eingeführt oder aus der Schaltung herausgenommen werden können, mittels Auswahlkontakte (4E), sodass es ermöglicht wird, dass der im Ausgang (4C) erhaltene äquivalente elektrische Widerstand der vom Benutzer gewünschten Wert erreicht.

9. System zum Beschaffen von Daten und Vervielfachen von Signalisierungs- und Schutzkontakten in Geräten von Umspannwerken und Kraftwerken und Ähnliches nach Anspruch 1, **dadurch gekennzeichnet, dass** die direkte Integration von Sensoren und Schutz- und Überwachungsvorrichtungen (1) des Geräts in der digitalen Datenbeschaffung ermöglicht wird, sodass auf die Verwendung von den Hilfsrelais, welche Kontakte vervielfachen als Eingangsmittel von Kontaktstatus-Information, verzichtet wird.

10. System zum Beschaffen von Daten und Vervielfachen von Signalisierungs- und Schutzkontakten in Geräten von Umspannwerken und Kraftwerken und Ähnliches nach Anspruch 9, **dadurch gekennzeichnet, dass** der Informationsausgang (1 C) zum Datenbeschaffungsgerät (5) in der Schutzvorrichtung (1) selbst eingeführt ist, unter Verwendung der freien NO- oder NC-Seite der Kontakte (2).

11. System zum Beschaffen von Daten und Vervielfachen von Signalisierungs- und Schutzkontakten in Geräten von Umspannwerken und Kraftwerken und Ähnliches nach Anspruch 9 oder 10, **dadurch gekennzeichnet, dass** die Verwendung von unterschiedlichen Technologien zur Übertragung der Kontaktstatus-Information (2) zwischen den Schutz- und Überwachungsvorrichtungen (1) und dem Beschaffungsgerät (5) ermöglicht wird, und dass die Übertragung der Kontaktstatus-Information (2) zwischen den Schutz- und Überwachungsvorrichtungen (1) und dem Beschaffungsgerät (5) in Form eines verschlüsselten Analogsignals ermöglicht wird.

12. System zum Beschaffen von Daten und Vervielfachen von Signalisierungs- und Schutzkontakten in Geräten von Umspannwerken und Kraftwerken und Ähnliches nach Anspruch 11, **dadurch gekennzeichnet, dass** jede Schutz- und Überwachungsvorrichtung (1) intern mit verschiedenen Widerstandskörpern (1 D) ausgerüstet ist, welche vom Ausgang (1C) getrennt werden, im Falle eines aktivierten Kontakts (2), wobei die gemeinsame Stelle mit der NO-Seite des Kontakts geschlossen wird; anderenfalls, mit dem Leerlaufkontakt (2), wenn die gemeinsame Stelle mit der NC-Seite des Kontakts geschlossen wird, die Widerstandskörper (1D) werden an den Ausgang (1C) angeschlossen, und dadurch, dass die Widerstandskörper (1 D) einzeln oder anders in die Schaltung eingeführt, mittels Auswahlkontakte (1E), was ermöglicht, dass der im Ausgang (1C) erhaltene äquivalente elektrische Widerstand der vom Benutzer gewünschten Wert erreicht.

13. System zum Beschaffen von Daten und Vervielfachen von Signalisierungs- und Schutzkontakten in Geräten von Umspannwerken und Kraftwerken und Ähnliches nach Anspruch 8 oder 12, **dadurch gekennzeichnet, dass** die Widerstandskörper (1 D, 4D) derart dimensioniert sind, dass deren elektrische Widerstände untereinander ein binäres Verhältnis von 20 für den ersten Widerstandskörper, 21 für den zweiten, 22 für den dritten, 23 für den vierten und so weiter, einhalten.

14. System zum Beschaffen von Daten und Vervielfachen von Signalisierungs- und Schutzkontakten in Geräten von Umspannwerken und Kraftwerken und Ähnliches nach Anspruch 7, 8, 11, 12 oder 13, **dadurch gekennzeichnet, dass** in jedem Hilfsrelais (4) oder in jeder Schutz- und Überwachungsvorrichtung (1) einen unterschiedlichen Widerstandswert ohne Wiederholungen programmiert ist, und dass die Ausgänge (4C, 1C) von allen Relais (4) oder von allen Vorrichtungen (1) parallel angeschlossen werden, derart dass der mit diesem Anschluss erhaltene äquivalente Widerstand durch geschlossene Kontakte (2) bestimmt wird.

15. System zum Beschaffen von Daten und Vervielfachen von Signalisierungs- und Schutzkontakten in Geräten von Umspannwerken und Kraftwerken und Ähnliches nach Anspruch 7, 8, 11, 12, 13 oder 14, **gekennzeichnet durch** die Verwendung von einer binären Proportionalität zwischen der Vorrichtung (1) oder den Widerstandskörper (1D, 4D) des Relais (4), sodass es unmöglich wird, dass die Widerstandskombination von zwei oder mehr Vorrichtungen (1) oder von zwei oder mehr Relais (4) dem Widerstand einer dritten Vorrichtung entsprechen, was ermöglicht, dass das Beschaffungsgerät (5) in der Lage ist exakt mitzuteilen welche Kontakte (2) offen sind und welche geschlossen sind, mittels einer laufenden Messung des solchen Widerstands.

16. System zum Beschaffen von Daten und Vervielfachen von Signalisierungs- und Schutzkontakten in Geräten von Umspannwerken und Kraftwerken und Ähnliches nach Anspruch 3, 4, 5, 7, 9, 10 oder 11, **dadurch gekennzeichnet, dass** die Übertragung der Kontaktstatus-Information zwischen den Schutz- und Überwachungsvorrichtungen (1) und dem Beschaffungsgerät (5) oder zwischen den Hilfsrelais (4) und dem Beschaffungsgerät (5) ermöglicht wird, mittels des Einschlusses, in den Vorrichtungen (1) oder in den Relais (4), einer elektronischen Schaltung (8), welche mit einem Eingang (8A) ausgerüstet ist, der die Messung des Zustands des Kontakts (2) durchführt, wodurch diese Schaltung (8) mit einem seriellen Kommunikationsport (8B) ausgerüstet ist, der mit dem Ausgang (1C, 4C) der Vorrichtung oder des Relais (4) angeschlossen ist.

17. System zum Beschaffen von Daten und Vervielfachen von Signalisierungs- und Schutzkontakten in Geräten von Umspannwerken und Kraftwerken und Ähnliches nach Anspruch 16, **dadurch gekennzeichnet, dass** die Kommunikationsports (8B) in einem Netzwerk angeschlossen sind, durch einen parallelen Anschluss an die Ausgänge (1C, 4C) aller Vorrichtungen (1) oder aller Relais (4), unter eventuellem Anschluss an einen seriellen Kommunikationsport (9) im Beschaffungsgerät (5), wodurch in jedem Kommunikationsport (8B) eine unterschiedliche Adresse programmiert ist, derart dass das Beschaffungsgerät (5) mit jeder der Vorrichtungen (1) oder der Relais (4) kommunizieren kann und aus diesen dann die Information über den aktuellen offenen oder geschlossenen Status in jedem Kontakt (2) erhalten kann.

18. System zum Beschaffen von Daten und Vervielfachen von Signalisierungs- und Schutzkontakten in Geräten von Umspannwerken und Kraftwerken und Ähnliches nach Anspruch 17, **dadurch gekennzeichnet, dass** der Kommunikationsport (9) des Beschaffungsgeräts (5) die Hilfsspeisung für die elektronischen Schaltungen (8) der Vorrichtungen (1) oder der Relais (4) bereitstellt, mittels jedes seriellen Kommunikationsnetzwerkes, ausgerüstet mit einer Speisungsquelle durch das Kommunikationsnetzwerk selbst.

19. System zum Beschaffen von Daten und Vervielfachen von Signalisierungs- und Schutzkontakten in Geräten von Umspannwerken und Kraftwerken und Ähnliches nach Anspruch 3, 4, 5, 7, 9, 10 oder 11, **dadurch gekennzeichnet, dass** die Übertragung der Kontaktstatus-Information zwischen der Schutz- und Überwachungsvorrichtung (1) und dem Beschaffungsgerät (5) oder zwischen den Hilfsrelais (4) und dem Beschaffungsgerät (5) unter Verwendung von mehreren Technologien, wie drahtloser Übertragung über Funkwellen, Übertragung unter Verwendung von Hilfsspeisungskabeln, unter anderem, ermöglicht wird.

## Revendications

1. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES", comportant:
- des relais auxiliaires (4) pour la multiplication de contacts, dans lesquels chaque relais auxiliaire (4) possède une bobine (4A) connectée à un contact (2) d'équipement respectif et plusieurs contacts de sortie (4B), dans lesquels cette bobine (4A) active ces différents contacts de sortie basés sur l'état du contact (2) de l'équipement, de sorte que les informations sur les états du contact (2) est déjà disponible dans les relais auxiliaires (4); et
- un système d'acquisition de données de l'état du contact,
dans lequel le système est caractérisé en que ce système d'acquisition de données de l'état du contact est un équipement (5) d'acquisition de données comportant les relais auxiliaires (4) au moyen d'une entrée bifilaire (4C) spécifiquement mise en oeuvre pour cette fonction dans les relais auxiliaires (4), dans lequel les deux bornes de chacune de ces entrées bifilaires (4C) sont respectivement connectées en parallèle dans tout les relais auxiliaires (4) et connectées à deux entrées (5A) respectives de l'équipement d'acquisition de données (5), en formant un réseau d'acquisition de données n'utilisant que deux fils.

2. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 1, **caractérisé en ce que** le contact de sortie (2) du capteur ou dispositif (1) est connecté à la bobine (4A) du relais auxiliaire (4) et cette bobine active ces différents contacts de sortie (4B) du relais auxiliaire (4), de sorte que ces contacts (4B) sont disponibles pour transmettre les informations à des systèmes différents (3).

3. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à cette revendication 2, **caractérisé en ce que** le relais auxiliaire (4) a une performance rapide de sorte qu'il n'y a pas de délai sensible entre l'excitation de sa bobine (4A) et la performance des contacts de sortie (4B), permettant ainsi l'application avec des contacts pour la déconnexion d'urgence de l'équipement.

4. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 1, **caractérisé en ce que** le pôle négatif du relais (4) bobines (4A) peut être utilisé comme une des bornes de la sortie (4C) pour l'acquisition de données car les pôles négatifs des bobines (4A) sont déjà interconnectés dans la plupart des applications.

5. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 1 ou 4, **caractérisé en ce qu'**une des bornes du contact de sortie (4B) peut être optionnellement utilisée comme une des bornes de sortie (4C) pour l'acquisition de données.

6. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 1, **caractérisé en ce que** dès que les informations de l'état du contact (2) sont arrivées à l'équipement d'acquisition (5) elles sont transmises à la supervision, surveillance ou d'autres systèmes situés distants en utilisant un port de communication en série (5B), employant quelconque standard existant comme moyen physique (5C) pour la transmission d'informations, tel que des paires torsadés, paires en fibre optique, communication sans fils et autres.

7. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément aux revendications 1, 4 ou 5, **caractérisé en ce qu'**il permet l'utilisation de différentes technologies pour la transmission des informations de l'état du contact entre les relais auxiliaires (4) et l'équipement d'acquisition (5) et **en ce qu'**il permet la transmission des informations de l'état du contact entre les relais auxiliaires (4) et l'équipement d'acquisition (5) en la forme d'un signal analogique crypté.

8. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 7 **caractérisé en ce que** chaque relais auxiliaire (4) est équipé internement de plusieurs résistances (4D) qui seront déconnectées de la sortie (4C) dans le cas où le contact (2) connecté à l'entrée du relais (4A) est ouvert; réciproquement, dans le contact fermé (2), les résistances (4D) seront connectées à la sortie (4C), et **en ce que** ces résistances (4D) peuvent être individuellement insérées dans le circuit ou en être retirées au moyen des contacts de sélection (4E), en permettant ainsi que la résistance électrique équivalente obtenue dans la sortie (4C) arrive à la valeur désirée par l'utilisateur.

9. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 1 **caractérisé en ce qu'**il permet l'intégration directe des capteurs et des dispositifs de protection et de supervision (1) de l'équipement dans l'acquisition de données numériques, en dispensant ainsi l'utilisation de relais auxiliaires qui multiplient les contacts comme moyen d'entrée d'informations de l'état du contact.

10. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 9, caractérisé en que la sortie d'informations (1C) à l'équipement d'acquisition des données (5) est inséré dans le propre dispositif de protection (1), en utilisant le côté libre NO ou NC des contacts (2).

11. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 9 ou 10, **caractérisé en ce qu'**il permet l'utilisation de différentes technologies pour la transmission des information de l'état du contact (2) entre les dispositifs de protection et de supervision (1) et l'équipement d'acquisition (5) et **en ce qu'**il permet la transmission des informations de l'état du contact (2) entre les dispositifs de protection et de supervision (1) et l'équipement d'acquisition (5) en la forme d'un signal analogique crypté.

12. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 11, **caractérisé en ce que** chaque dispositif de protection et de supervision (1) est équipé internement de plusieurs résistances (1 D) déconnectées de la sortie (1 C) dans le cas d'un contact (2) activé, fermant le point commun avec le côté NO du contact; autrement, avec le contact inactivé (2), lorsque le point commun avec le côté du contact est fermé, les résistances (1 D) seront connectées à la sortie (1C), et **en ce que** les résistances (1D) peuvent être individuellement ou autrement insérées dans le circuit au moyen des contacts de sélection (1 E), en permettant que la résistance électrique équivalente obtenue dans la sortie (1 C) arrive à la valeur désirée par l'utilisateur.

13. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément aux revendications 8 ou 12, **caractérisé en ce que** les résistances (1 D, 4D) ont une taille telle que leurs résistances électriques conservent un ratio de proportion binaire entre elles de 20 pour la première résistance, 21 pour la deuxième, 22 pour la troisième, 23 pour la quatrième et ainsi de suite.

14. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 7, 8, 11, 12 ou 13, **caractérisé en ce que** dans chaque relais auxiliaire (4) ou chaque dispositif de protection ou de supervision (1) une valeur de résistance différente est programmée sans répétitions et que les sorties (4C, 1C) de tous les relais (4) ou de tous les dispositifs (1) sont connectées en parallèle, de sorte que la résistance équivalente obtenue dans ceux qui sont connectés sera déterminée par les contacts fermés (2).

15. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 7, 8, 11, 12, 13 ou 14, caractérisé en l'utilisation de la proportionnalité binaire entre le dispositif (1) ou les résistances (1 D, 4D) du relais (4) de sorte à rendre impossible que la combinaison de la résistance de deux ou plusieurs dispositifs (1) ou de deux ou plusieurs relais (4) corresponde à la résistance d'un troisième, ce qui rend possible que l'équipement d'acquisition (5) est capable d'informer exactement de quels contacts (2) sont ouverts et quels sont fermés au moyen de la mesure continue de cette résistance.

16. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 3, 4, 5, 7, 9, 10 ou 11, **caractérisé en ce qu'**il permet la transmission des informations de l'état du contact entre les dispositifs de protection et de supervision (1) et l'équipement d'acquisition (5) ou entre les relais auxiliaires (4) et l'équipement d'acquisition (5), au moyen de l'inclusion, dans les dispositifs (1) ou dans les relais (4), d'un circuit électronique (8) équipé d'une entrée (8A) qui mesure l'état du contact (2), dans lequel ce circuit (8) est équipé d'un port de communication en série (8B) connecté à la sortie (1 C, 4C) du dispositif ou du relais (4).

17. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 16, **caractérisé en ce que** les ports de communication (8B) sont connectés dans un réseau par la connexion en parallèle aux sorties (1 C, 4C) de tous les dispositifs (1) ou de tous les relais (4), finalement connectés à un port de communication en série (9) dans l'équipement d'acquisition (5), dans lequel dans chaque port de communication (8B) une adresse est programmée, de sorte que l'équipement d'acquisition (5) peut communiquer avec chacun des dispositifs (1) ou des relais (4) et obtient d'eux les informations sur l'état actuel ouvert ou fermé de chaque contact (2).

18. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 17, **caractérisé en ce que** le port de communication (9) de l'équipement d'acquisition (5) fournit l'alimentation auxiliaire aux circuits électroniques (8) des dispositifs (1) ou aux relais (4) au moyen d'un réseau de communication en série équipé de ressources d'alimentation à travers le même réseau de communication.

19. "SYSTÈME POUR L'ACQUISITION DE DONNÉES ET LA MULTIPLICATION DE CONTACTS DE SIGNALISATION ET DE PROTECTION DANS DES ÉQUIPEMENTS DE SOUS-STATIONS ET DE CENTRALES ÉLECTRIQUES ET ASSIMILÉES" conformément à la revendication 3, 4, 5, 7, 9, 10 ou 11, **caractérisé en ce qu'**il permet la transmission des informations de l'état du contact entre le dispositif de protection et de supervision (1) et l'équipement d'acquisition (5) ou entre les relais auxiliaires (4) et l'équipement d'acquisition (5) en utilisant différentes technologies, telles que la transmission sans fil à travers des ondes hertziennes, une transmission utilisant les câbles d'alimentation auxiliaires de l'installation, entre autres.
